# EUROPEAN PATENT SPECIFICATION

(11) **EP 0 565 386 B1**
(45) Date of publication and mention of the grant of the patent: **10.07.1996**
(21) Application number: 93302821.9
(22) Date of filing: 08.04.1993
(51) Int. Cl.: A23L 1/176, A23L 1/0522, A23J 3/18, A23P 1/14

(54) **Crisp edible material and method of preparing same**
Knuspriges Nahrungsmittel und Verfahren zu seiner Herstellung
Aliment croustillant et méthode pour le préparer

(30) Priority: 10.04.1992 EP 92303239
(43) Date of publication of application: 13.10.1993
(73) Proprietor: UNILEVER PLC, London EC4P 4BQ (GB); UNILEVER N.V., NL-3013 AL Rotterdam (NL)
(72) Inventor: Davies, Alan, Unilever Research Colworth Lab., Bedford MK44 1LQ (GB); Henderson, John Andrew, Edmunds, Suffolk IP33 2JF (GB); Ingman, Simon, Unilever Research Colworth Lab., Bedford MK44 1LQ (GB)
(74) Representative: Kirsch, Susan Edith

(56) References cited:
- EP-A- 0 319 287
- FR-A- 2 095 138
- GB-A- 1 306 384
- US-A- 3 259 503
- Extrusion Cooking pp. 265, 266, 275-277

## Description

Crumbed food products, ie food products having a bread crumb coating, are known in a great variety and are both prepared in the kitchen for direct consumption and in the food industry for frozen or chilled storage and distribution.

Generally accepted texture requirements for crumbing materials being light, not too hard and simultaneously crisp, which properties should be little or not influenced by usual humidity conditions prevailing during usual storage and shipping.

EP 319 287 (Unilever) discloses a crisp edible material comprising a high heat-set protein level (greater than 30%, preferably greater than 50%, more preferably higher than 75% by weight), and optionally from 0 to 40% by weight starch.

Extrusion Cooking edited by C Mercier, P Linko and J M Harper (1989) pp 265, 276 & 277 discloses that the amylose-amylopectin ratio is important in determining properties of starch-based extruded products. A 5-20% amylose level in starch is recommended to give adequate crispness and acceptable texture. Table 1 on page 277 illustrates that waxy maize starch has a lower water absorption index compared to normal starch.

It is an object of the invention to provide crisp edible material showing a combination of the above properties as well as a method of preparing this material.

The invention provides thereto a crisp edible material predominantly comprising gluten and starch, comprising amylopectin and amylose, which is characterized in that the pure gluten protein content ranges from 62% to 46%, the total starch content is from 27.2% to 45.4% and the ratio of amylopectin to amylose ranges from 12:1 to 24.4:1. Such crisp materials have a long keepability under high humidity conditions. This effect and these properties are particularly advantageous when the expanded material is used as a crumbing material.

In this specification and claims percentages and parts are related to weights, unless otherwise indicated.

The term "gluten" in practice is ambiguous: "commercial gluten" is a product containing about one tenth starch, the bulk i.e. roughly three quarters, being a proteinaceous product or "pure gluten protein", the balance being lipid and water. Analysis of one commercial sample being as follows: gluten protein 77%, starch 9%, lipid 6% and water 7%. For clarity the expressions "commercial gluten" and "pure gluten protein" are used throughout this specification and claims.

Also for clarity the total starch content is referred to. This includes the starch content of the commercial gluten plus any additional starch.

For preparing crumbs several processes are in use at the moment, the best known being; preparing a dough, allowing this to be blended with any leavening agent, then baking, drying and comminuting or extruding a low moisture mixture of the aforementioned dough at increased temperature and pressure, also known as cooker-extruding, drying and comminuting.

Unexpectedly an expanded food material of acceptable hardness and a high crispiness which can fairly survive usual humidity conditions can be prepared by extruding a mixture of predominantly 46 to 62% of pure gluten protein and 27.2 to 45.4% of total starch content having an amylopectin to amylose ratio of from 12:1 to 24.4:1 and up to 30 parts water per 100 parts solids, although 20 parts or less is preferred, at elevated temperatures between 100 and 150°C and in particular between 120 and 140°C and drying the extrudate. Drying is preferably effected using a gas, e.g. warm air, having a temperature not exceeding 70°C. The above preferred conditions all contribute to obtaining a less hard, crispier and better moisture resisting product. For manufacturing crumbs the product so obtained can be comminuted to the desired particle size.

The invention will be exemplified in the following examples of some at this moment preferred embodiments (Examples XIII, I and IV) and some comparative compositions (Examples XII, XIV, XV, II, III, V, VI, VII, VIII, IX, X, XI).

### Example I

70 parts commercial gluten containing 9% wheat starch, 30 parts waxy maize starch (1% amylose and 90% amylopectin) and 20 parts total water (including water in gluten and starch) were fed into a "Clextrel" cooker-extruder driven at approximately 175 revs/min. Inside the extruder a temperature developed of between 125 and 135°C. On emerging through a nozzle having a single extrusion opening of approximately 8mm the dough expanded by 50 to 100% and set. After drying for not less than half an hour using hot air of 50-70°C the extrudate was milled.

### Example II to XV

The process of example I was repeated, using different compositions as summarized in table A.

### Evaluation

The products as enlisted in table A were tested for hardness/crispness immediately after cooling down to room temperature using a trained test panel, distinguishing between H = hard and unacceptable, C = crisp, H/C = a bit in between but still just acceptable and T = tough.

Also the products were tested for moisture resistance by equilibrating in environments of different relative humidity. After equilibration the moisture content of the product was determined and also the brittleness properties by determining the acoustic emission using a Locan® analyzer when fracturing the product and expressing this as a percentage of the acoustic emission when fracturing the freshly prepared product. The results of these tests are summarized in Table B.

For both the panel test and the acoustic emission determination the particle size for the crumb was from 2.4 to 2.8mm.

In this table the following expressions are used:
- CGL: = commercial gluten (comprising 9% wheat starch 77%, protein, 6% lipid and 7% moisture)
- WMS: = waxy maize starch (1% amylose + 90% amylopectin and about 10% moisture)
- WS: = wheat starch (24% amylose, 67% amylopectin and 9% moisture)
- texture: = texture defined by an experienced consumer testing group
- C: = crisp
- H: = hard
- C/H: = partly crisp/partly hard
- T: = tough
- RH: = relative humidity %
- brittleness: = measured by acoustic emission in % of the emission of the fresh prepared product at 0% relative humidity.

**TABLE A**

| **Example** | **COMPOSITION** | | | **Pure Gluten Protein** | **Amylose** | **Amylopectin** | **RATIO Amylopectin:Amylose** |
|---|---|---|---|---|---|---|---|
| | **CGL** | **WMS** | **WS** | | | | |
| XII | 100 | -- | -- | 77 | 2.1 | 6.0 | 2.9:1 |
| XIII | 80 | 20 | -- | 62 | 1.9 | 22.8 | 12.0:1 |
| XIV | 80 | 10 | 10 | 62 | 4.2 | 20.5 | 4.9:1 |
| XV | 80 | -- | 20 | 62 | 6.5 | 18.2 | 2.8:1 |
| I | 70 | 30 | -- | 54 | 1.77 | 31.2 | 17.6:1 |
| II | 70 | 15 | 15 | 54 | 5.24 | 27.8 | 5.3:1 |
| III | 70 | -- | 30 | 54 | 8.7 | 24.3 | 2.8:1 |
| IV | 60 | 40 | -- | 46 | 1.62 | 39.7 | 24.4:1 |
| V | 60 | 20 | 20 | 46 | 6.24 | 35.0 | 5.6:1 |
| VI | 60 | -- | 40 | 46 | 10.86 | 30.4 | 2.8:1 |
| VII | 40 | 60 | -- | 31 | 1.38 | 56.4 | 40.9:1 |
| VIII | 40 | 30 | 30 | 31 | 8.31 | 49.5 | 5.6:1 |
| IX | 40 | -- | 60 | 31 | 15.24 | 42.6 | 2.8:1 |
| X | -- | 100 | -- | -- | 0.9 | 90 | 100:1 |
| XI | -- | -- | 100 | -- | 24 | 67 | 2.8:1 |

**TABLE B**

| **Example** | **ACOUSTIC EMISSION (%)** | | | | | **MOISTURE CONTENT (%)** | | | | | **TEXTURE AT 0% RH** |
|---|---|---|---|---|---|---|---|---|---|---|---|
| **RH** | **0** | **33** | **57** | **69** | **75** | **0** | **33** | **57** | **69** | **58** | |
| XII | 100 | 98 | 98 | 84 | 9 | 1.9 | 6.1 | 8.3 | 9.3 | 11.7 | H |
| XIII | 100 | -- | 93 | -- | 3 | 2.6 | -- | 9.7 | -- | 12.4 | C/H |
| XIV | 100 | -- | 30 | -- | 1 | 2.1 | -- | 9.7 | -- | 12.6 | C/H |
| XV | 100 | -- | 48 | -- | 2 | 2.7 | -- | 10.1 | -- | 12.8 | C/H |
| I | 100 | 80 | 84 | 52 | 1 | 1.6 | 8.2 | 9.7 | 10.4 | 12.5 | C |
| II | 100 | 94 | 53 | 22 | 1 | 1.7 | 7.9 | 10.9 | 10.5 | -- | C |
| III | 100 | 64 | 9 | 1 | 0 | 1.6 | 9.1 | 10.8 | 11.5 | -- | C |
| IV | 100 | 87 | 80 | 43 | 1 | 1.5 | 7.9 | 9.7 | 10.8 | 11.5 | C |
| V | 100 | 93 | 42 | 14 | 1 | 1.6 | 7.1 | 9.3 | 10.2 | 12.5 | C |
| VI | 100 | 96 | 7 | 2 | 0 | 1.5 | 8.9 | 10.7 | 11.3 | 13.1 | C |
| VII | 100 | 89 | 36 | 12 | 1 | 2.6 | 8.9 | 11.2 | 11.6 | 13.6 | C |
| VIII | 100 | -- | 50 | -- | 3 | 3.1 | -- | 10.5 | -- | 12.8 | C |
| IX | 100 | 70 | 10 | 5 | 1 | 2.6 | 8.6 | 10.8 | 11.0 | 13.1 | C |
| X | 100 | 86 | 9 | 4 | 0 | 2.1 | 9.2 | 12.7 | 13.4 | 14.8 | T |
| XI | 100 | 35 | 3 | 2 | 1 | 2.2 | 9.0 | 11.7 | 12.2 | 14.2 | T |

## Claims

1. Crisp edible material predominantly comprising gluten and starch including amylopectin and amylose characterised in that the pure gluten protein content ranges from 62% to 46%, the total starch content is from 27.2% to 45.4% and the ratio of amylopectin to amylose ranges from 12:1 to 24.4:1.

2. Material according to claim 1, characterised in that the material is expanded.

3. A method of preparing an expanded food material comprising extruding a mixture mainly consisting of starch and gluten in the presence of water at elevated temperature, characterised in that predominantly 46 to 62% of pure gluten protein and 27.2 to 45.4% of starch having an amylopectin to amylose ratio ranging from 12:1 to 24.4:1 is mixed together with up to 30 parts water per 100 parts solids and extruded at a temperature between 100 and 150°C.

4. The method of claim 3 characterised in that the mixture is extruded at a temperature between 120 and 140°C.

5. The method of claim 3 or 4 characterised in that up to 20 parts water per 100 parts solids are used.

6. The method of claim 3, 4 or 5, characterised in that the starch is predominantly waxy maize or waxy rice starch.

7. The method of any one of claims 3 to 6, characterised in that the expanded material after extrusion is dried using a gas having a temperature not exceeding 70°C.

## Patentansprüche

1. Knuspriges eßbares Material, welches vorwiegend Gluten und Stärke, die Amylopektin und Amylose enthält, umfaßt, dadurch gekennzeichnet, daß der reine Gluten-Proteingehalt im Bereich von 62 % bis 46 % liegt, der gesamte Stärkegehalt 27,2 % bis 45,4 % beträgt, und das Verhältnis von Amylopektin zu Amylose im Bereich von 12:1 bis 24,4:1 liegt.

2. Material nach Anspruch 1, dadurch gekennzeichnet, daß das Material expandiert ist.

3. Verfahren zur Herstellung eines expandierten Nahrungsmittelmaterials, welches das Extrudieren einer Mischung, die hauptsächlich aus Stärke und Gluten besteht, in Anwesenheit von Wasser bei erhöhter Temperatur umfaßt, dadurch gekennzeichnet, daß vorwiegend 46 bis 62 % reines Gluten-Protein und 27,2 bis 45,4 % Stärke mit einem Verhältnis von Amylopektin zu Amylose im Bereich von 12:1 bis 24,4:1 mit bis zu 30 Teilen Wasser pro 100 Teilen Feststoffe gemischt und bei einer Temperatur zwischen 100 und 150°C extrudiert werden.

4. Verfahren nach Anspruch 3, dadurch gekennzeichnet, daß die Mischung bei einer Temperatur zwischen 120 und 140°C extrudiert wird.

5. Verfahren nach Anspruch 3 oder 4, dadurch gekennzeichnet, daß bis zu 20 Teile Wasser pro 100 Teilen Feststoffe verwendet werden.

6. Verfahren nach Anspruch 3, 4 oder 5, dadurch gekennzeichnet, daß die Stärke vorwiegend Wachsmais- oder Wachsreisstärke ist.

7. Verfahren nach einem der Ansprüche 3 bis 6, dadurch gekennzeichnet, daß das expandierte Material nach der Extrusion unter Verwendung eines Gases mit einer Temperatur von nicht mehr als 70°C getrocknet wird.

## Revendications

1. Matière comestible croustillante comprenant de façon prédominante du gluten et de l'amidon notamment de l'amylopectine et de l'amylose, caractérisée en ce que la teneur en protéine de gluten pure va de 62 à 46%, la teneur totale en amidon est de 27,2 à 45,4% et le rapport d'amylopectine à l'amylose va de 12:1 à 24,4:1.

2. Matière selon la revendication 1, caractérisée en ce que la matière est expansée.

3. Procédé de préparation d'un aliment expansé consistant à extruder un mélange comprenant principalement de l'amidon et du gluten en présence d'eau à une température élevée, caractérisé en ce qu'on mélange de façon prédominante 46 à 62% de protéine de gluten pure et 27,2 à 45,4% d'amidon ayant un rapport d'amylopectine/amylose allant de 12:1 à 24,4:1 ensemble avec jusqu'à 30 parties d'eau par 100 parties de solides et qu'on extrude à une température entre 100 et 150°C.

4. Procédé selon la revendication 3, caractérisé en ce que le mélange est extrudé à une température entre 120 et 140°C.

5. Procédé selon la revendication 3 ou 4, caractérisé en ce qu'on utilise jusqu'à 20 parties d'eau par 100 parties de solides.

6. Procédé selon la revendication 3, 4 ou 5, caractérisé en ce que l'amidon est principalement un amidon de maïs cireux ou un amidon de riz cireux.

7. Procédé selon l'une quelconque des revendications 3 à 6, caractérisé en ce qu'on sèche la matière expansée après extrusion en utilisant un gaz ayant une température qui n'excède pas 70°C.
